# EUROPEAN PATENT SPECIFICATION

(11) **EP 2 535 272 B1**
(45) Date of publication and mention of the grant of the patent: **18.03.2015**
(21) Application number: 11382195.3
(22) Date of filing: 13.06.2011
(51) Int. Cl.: B64D 39/00, B64D 39/04

(54) **Boom control system**
Auslegersteuerungssystem
Système de contrôle de bras

(43) Date of publication of application: 19.12.2012
(73) Proprietor: EADS Construcciones Aeronauticas, S.A., 28022 Madrid (ES)
(72) Inventor: Martinez Vazquez, Bruno, 28906 Getafe, Madrid (ES)
(74) Representative: Elzaburu Marquez, Alberto

(56) References cited:
- EP-A1- 0 780 292
- EP-A1- 1 361 156
- WO-A1-2010/071643
- US-A1- 2003 205 643

## Description

### FIELD OF THE INVENTION

The present invention relates to a system for controlling the movement of an aircraft refueling boom assembly used in in-flight refueling operations between a tanker and a receiver aircraft. WO 2010/071643 A1 discloses such a system which comprises the features of the preamble of claim 1*.*

### BACKGROUND

An aircraft refueling boom assembly is a structure usually installed on the tail cone of a tanker aircraft, intended to perform aerial refueling operations between said tanker aircraft and a receiver aircraft.

A typical aircraft refueling boom assembly in a tanker aircraft comprises a structural beam and a telescopic beam, such that the telescopic beam is able to be extended or retracted with respect to the structural beam, therefore relative movements between the tanker and the receiver aircraft being allowed. Usually, when refueling is effected, the boom assembly is trimmed, forming an angle of about 30 degrees below the tanker aircraft waterline, further movement of extension or retraction of the telescopic beam with respect to the structural beam being possible.

It is known in the state of the art an actuation system in the aircraft refueling boom assembly, this actuation system controlling the movements of the telescopic beam with respect to the structural beam. Typically, the actuation system comprises an actuator, operated by a motor, the actuator driving a linear transmission chain that controls the movement of the telescopic beam by means of a linkage element.

However, the mechanical failure (typically collapse or mechanical fracture) of one of the components of the mentioned actuation system in the aircraft refueling boom assembly, or of any of its internal elements, will have as a consequence that the telescopic beam is freewheeling in an uncontrolled manner. As there is no other linkage between the structural beam and the telescopic beam apart from the actuation system, and due to the operational angles of the boom assembly (always below the horizontal line), the telescopic beam will be accelerated by the gravity force in a free-fall, and if it is not stopped by any other structural element, the telescopic beam will end up being ejected from the boom assembly. This telescopic beam may then, as a result, impact a receiver aircraft which is situated nearby, or may impact any other element on the ground. These failures may have very severe consequences.

For the reasons just mentioned, known actuation systems are provided with a high number of redundancies and safety factors, in order to avoid that a single failure may lead to any of the problems just mentioned, or making that extremely improbable. The problem of these redundancies and safety factors is that they present a high impact on the system weight, which is a critical factor in all aerospace applications.

On the other hand, known solutions also provide actuations systems with mechanical stopping devices, such as end stops, located on each end of the telescopic beam. However, these known solutions, apart from the increased weight problem, present a further problem, as these stopping devices must be designed in such way that they can absorb all the energy that the telescopic beam provides during its free fall. This makes that these stopping devices are complex and of a high dimension, therefore having a high impact on the aircraft weight.

The present invention is intended to solve the above-mentioned disadvantages.

### SUMMARY OF THE INVENTION

The purpose of the present invention is to provide an actuation system for controlling the movement of an aircraft refueling boom assembly used in in-flight refueling operations between a tanker aircraft and a receiver aircraft. More specifically, the object of the actuation system of the invention is to detect any uncontrolled motion of the telescopic beam of the aircraft refueling boom assembly produced by a mechanical failure in any of the components of said system, this actuation system being able to trigger a blocking device intended to avoid or limit such uncontrolled motion of the telescopic beam.

The actuation system of the invention is configured such that there exists a kinematics relationship between the movement of the actuation system and the movement of the telescopic beam, this kinematics relationship being determined by a mathematical expression.

Thus, the actuation system of the invention comprises a first sensing device measuring the movement of the telescopic beam, a second sensing device measuring the movement of the actuation device and a control device comparing these measurements and checking that such measurements are coherent with the mathematical kinematics relationship. In case of discrepancy, the control device in the actuation system triggers a blocking device that blocks or reduces the telescopic beam free fall.

One of the main advantages of the actuation system of the invention is that this system is able to detect in a very short time any mechanical failure that may lead to an uncontrolled motion of the telescopic beam, therefore allowing the control device in the actuation system sufficient reaction time to trigger the corrective actions before the telescopic beam gets too much speed, and consequently too much energy. If the blocking device is triggered, it stops completely the telescopic beam or decelerates it in a way such that smaller end stops are needed to fully stop the telescopic beam.

### BRIEF DESCRIPTION OF DRAWINGS

The foregoing objects and many of the attendant advantages of this invention will become more readily appreciated as the same becomes better understood by reference to the following detailed description when taken in conjunction with the accompanying drawings, wherein:
Figure 1 shows a general view of the in flight refueling operation between a tanker aircraft and a receiver aircraft, by means of an aircraft refueling boom assembly in the tanker aircraft.
Figure 2 shows a sectional view of the main components in an actuation system of an aircraft refueling boom assembly, according to the prior art.
Figure 3 shows a sectional view of the main components in an actuation system of an aircraft refueling boom assembly, according to the present invention.
Figure 4 shows a general view of the components in an actuation system of an aircraft refueling boom assembly, according to a preferred embodiment of the present invention.

### DETAILED DESCRIPTION OF THE INVENTION

A typical aircraft refueling boom assembly in a tanker aircraft 1 according to the known prior art comprises a structural beam 10 and a telescopic beam 20, such that the telescopic beam 20 is able to be extended or retracted with respect to the structural beam 10, therefore relative movements between the tanker aircraft 1 and the receiver aircraft 2 are allowed. Usually, when refueling is effected, the boom assembly is trimmed, forming an angle of about 30 degrees below the tanker aircraft waterline, further movement of extension or retraction of the telescopic beam 20 with respect to the structural beam 10 being possible.

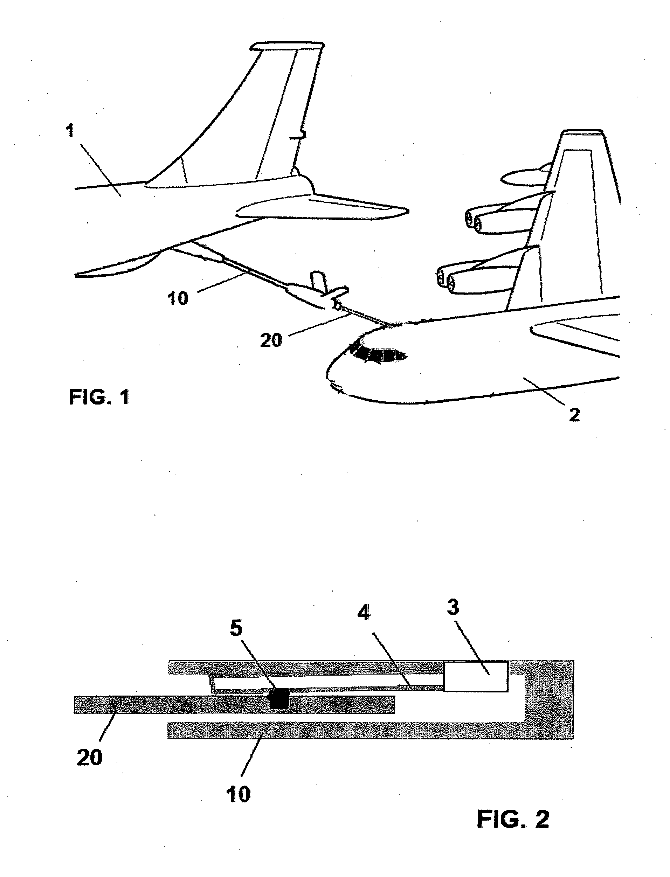

It is known in the state of the art an actuation system in the aircraft refueling boom assembly, this actuation system controlling the movements of the telescopic beam 20 with respect to the structural beam 10 (see Figure 2). Typically, the actuation system comprises an actuator 3, which can be an electrical/electromechanical actuator operated by a motor (not shown) or an hydraulic actuator, the actuator 3 driving a linear transmission chain 4 that controls the movement of the telescopic beam 20 by means of a linkage element 5. This actuation system controls the movements of the telescopic beam 20 with respect to the structural beam 10.

The collapse (mechanical fracture) of at least one of the components of such actuation system, or of any of its internal elements, will have as consequence that the telescopic beam 20 will be freewheeling in an uncontrolled manner. In the known systems, there exists no other linkage between the structural beam 10 and the telescopic beam 20 other than the transmission chain 4 and linkage elements 5, having as a result that the telescopic beam 20 accelerates by the gravity force in a free-fall.

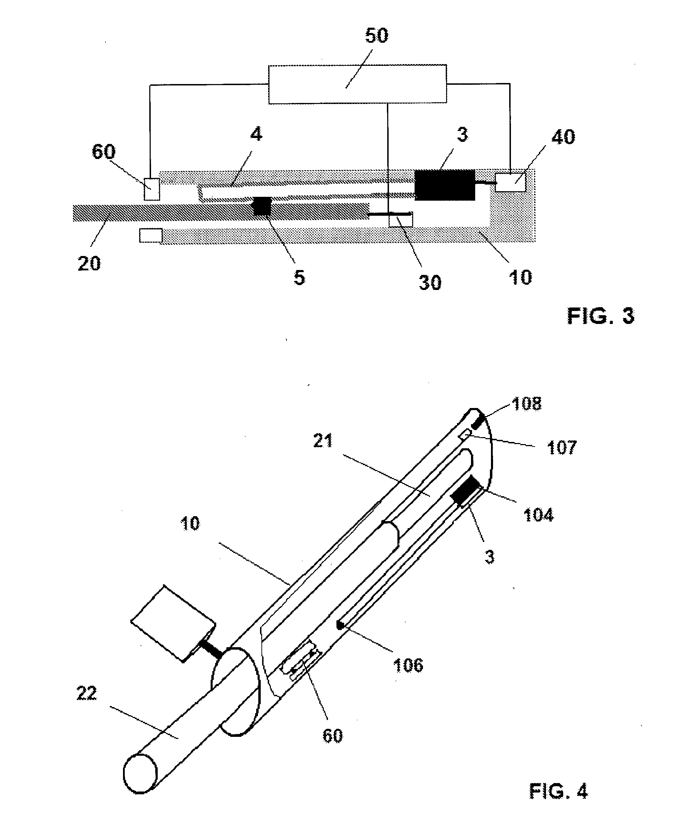

In order to overcome these problems, the present invention provides an actuation system detecting any uncontrolled motion of the telescopic beam 20, such that this actuation system is able to trigger a blocking device 60 intended to avoid or limit such uncontrolled motion of the telescopic beam 20, as it can be seen in Figure 3. The actuation system of the invention comprises an actuator 3, driven by a motor, a transmission chain 4 and a linkage element 5. The mechanical part of the actuation system comprises mechanical elements: therefore, the kinematics relationship between the motion of the telescopic beam 20 and the movement of the actuator 3 is clearly defined and predictable. Mathematical expressions can be established in order to quantify such kinematics relationship.

Thus, the actuation system of the invention further comprises a first sensing device 30 that measures the movement of the telescopic beam 20, also comprising a second sensing device 40 that measures the movement of the driving motor moving the actuator 3. Furthermore, the actuation system comprises a control device 50, that compares the measurements of the first sensing device 30 and that of the second sensing device 40, checking that such measurements are coherent with the theoretical kinematics relationships of the mechanical actuation system of the telescopic beam 20.

In case of discrepancy in the coherence of the measurements and the theoretical values expected, the control device 50 sends an alert signal to the blocking device 60, triggering the mechanism of said device 60 that blocks or reduces the telescopic beam 20 free-fall energy.

Therefore, the actuation system of the invention comprises:
- At least two sensing devices, 30 and 40, measuring the movement of at least two different mechanical elements of the actuation system (actuator 3, motor, if the actuator is electrical/electromechanical, transmission chain 4 or telescopic beam 20). The sensing devices 30, 40 can measure force, acceleration, speed, position or any other physical magnitudes that allow the calculation of force, acceleration, speed and/or position.
- A control device 50 that checks the coherence of the measurements of the at least two sensing devices 30, 40 with respect to the theoretical kinematics relationships defined for the actuation system.
- A blocking device 60 triggered by a warning or alert signal generated by the control device 50, this blocking device 60 blocking or reducing the movement of the telescopic beam 20.

Further details of the actuation system of the invention are represented in Figure 4, representing a preferred embodiment of the actuation system of the present invention. The aircraft refueling boom assembly in a tanker aircraft 1 comprises a structural beam 10 and a telescopic beam 20. The telescopic beam 20 further comprises a fixed part 21 and a movable part 22, the movable part 22 sliding over the fixed part 21. The movement of the telescopic beam 20 is controlled by the actuator 3 in the actuation system, driving the transmission chain 4 between two driving elements, 106 and 104 (typically, these driving elements 106 and 104 are driving sprockets within the transmission chain 4). The driving element 104 is located inside the actuator 3.

In the preferred embodiment showed in Figure 4, the sensing device 30 comprises a linear displacement transducer (LVDT) 107, effecting the measurement of the linear displacement of the telescopic beam 22. Besides, in this preferred embodiment, the actuator 3 is an electrical/electromechanical actuator operated by a rotary motor, such that the sensing device 40 in this preferred embodiment comprises a rotary resolver 108, that effects the measurement of the rotary movement (angular speed) of the motor driving this actuator 3. In the preferred embodiment showed, the actuation system further comprises a blocking device 60, typically an electromagnetic friction brake.

In the case mentioned, showed in Figure 4, the control device 50 controls and computes in real time the angular speed w of the motor driving the electromechanical actuator 3 by means of the rotary resolver 108. The linear speed V of the transmission chain 4, will be V1 = K*w, where K is a constant function of the electromechanical actuator 3 gear ratio GR and the driving elements 106 and 104 dimensions, typically diameter D (K = w*p*D/GR). The linear displacement transducer (LVDT) 107 effects measurements at two consecutive time steps separated by ΔT in the corresponding telescopic beam positions X1 and X2. The telescopic beam speed will be V2=(X2-X1)/ ΔT.

The control device 50 calculates continuously the two values V1 and V2, as well as its error ε=|V2-V1|. If the computed error ε is higher than a defined threshold (the threshold being defined as a function of the tolerances of the different measurement systems, transducer 107, resolver 108), then this control device 50 triggers the blocking device 60.

Although the present invention has been fully described in connection with preferred embodiments, it is evident that modifications may be introduced within the scope thereof, not considering this as limited by these embodiments, but by the contents of the following claims.

## Claims

1. An aircraft refuelling boom assembly comprising a structural beam (10), a telescopic beam (20) and an actuation system for controlling the movement of the telescopic beam (20) with respect to a structural beam (10) in in-flight refueling operations whereby the actuation system comprises an actuation device (3) and at least two sensing devices, a first sensing device (30) and a second sensing device (40), measuring physical magnitudes of at least two different mechanical elements of the actuation system, the first sensing device (30) measuring the movement of the actuation device (3) and the second sensing device (40) measuring the movement of the telescopic beam (20) such that there exists a kinematics relationship between the movement of the actuation system and the movement of the telescopic beam (20), the actuation system further comprising a control device (50) checking the coherence of said physical magnitudes measured with respect to the kinematics relationship, **characterised in that**
the boom assembly further comprises a blocking device (60) intended to avoid or limit uncontrolled motion of the telescopic beam (20) which is triggered by the control device (50) in case of a discrepancy between the kinematics relationship and the measurements.

2. Aircraft refuelling boom assembly according to claim 1, wherein the physical magnitudes measured are force, acceleration, speed or position.

3. Aircraft refuelling boom assembly according to any of claims 1-2, wherein the first sensing device (30) measures the linear displacement of the telescopic beam (20).

4. Aircraft refuelling boom assembly according to claim 3, wherein the first sensing device (30) comprises a linear displacement transducer (LVDT).

5. Aircraft refuelling boom assembly according to any of claims 1-4, wherein the actuation device (3) drives a linear transmission chain (4) that controls the movement of the telescopic beam (20).

6. Aircraft refuelling boom assembly according to claim 5, wherein the actuation device (3) is an electrical/electromechanical actuator operated by a motor.

7. Aircraft refuelling boom assembly according to claim 5, wherein the actuation device (3) is an hydraulic actuator.

8. Aircraft refuelling boom assembly according to claim 6, wherein the second sensing device (40) comprises a rotary resolver (108) effecting the measurement of the rotary movement of the motor driving the actuation device(3).

9. Aircraft refuelling boom assembly according to any of the previous claims, wherein the blocking device (60) comprises an electromagnetic friction brake.

10. Aircraft refuelling boom assembly according to any of the previous claims, further comprising a transmission chain (4) driven between two driving elements (106, 104) controlling the movement of the telescopic beam (20).

11. Aircraft comprising a refuelling boom assembly according to any of the previous claims.

## Patentansprüche

1. Auslegeranordnung zur Luftbetankung mit einem strukturellen Rohrelement (10), einem teleskopischen Rohrelement (20) und einem Betätigungssystem zum Steuern der Bewegung des teleskopischen Rohrelements (20) bezüglich des strukturellen Rohrelements (10) bei Luftbetankungsvorgängen, wobei das Betätigungssystem eine Betätigungseinrichtung (3) und mindestens zwei Erfassungseinrichtungen, eine erste Erfassungseinrichtung (30) und eine zweite Erfassungseinrichtung (40), zum Messen physikalischer Größen mindestens zweier verschiedener mechanischer Elemente des Betätigungssystems aufweist, wobei die erste Erfassungseinrichtung (30) die Bewegung der Betätigungseinrichtung (3) und die zweite Erfassungseinrichtung (40) die Bewegung des teleskopischen Rohrelements (20) misst, so dass eine Kinematikbeziehung zwischen der Bewegung des Betätigungssystems und der Bewegung des teleskopischen Rohrelements (20) besteht, wobei das Betätigungssystem ferner eine Steuereinrichtung (50) zum Prüfen der Stimmigkeit der gemessenen physikalischen Größen mit der Kinematikbeziehung aufweist;
**dadurch gekennzeichnet, dass**
die Auslegeranordnung ferner eine Blockiereinrichtung (60) aufweist, die dafür vorgesehen ist, eine unkontrollierte Bewegung des teleskopischen Rohrelements (20) zu verhindern oder zu begrenzen, wobei die Blockiereinrichtung durch die Steuereinrichtung (50) ausgelöst wird, wenn zwischen der Kinematikbeziehung und den Messergebnissen eine Diskrepanz auftritt.

2. Auslegeranordnung zur Luftbetankung nach Anspruch 1, wobei die gemessenen physikalischen Größen eine Kraft, eine Beschleunigung, eine Geschwindigkeit oder eine Position sind.

3. Auslegeranordnung zur Luftbetankung nach Anspruch 1 oder 2, wobei die erste Erfassungseinrichtung (30) den linearen Versatz des teleskopischen Rohrelements (20) misst.

4. Auslegeranordnung zur Luftbetankung nach Anspruch 3, wobei die erste Erfassungseinrichtung (30) einen Differentialtransformator (Linear Variable Displacement Transducer (LVDT)) aufweist.

5. Auslegeranordnung zur Luftbetankung nach einem der Ansprüche 1 bis 4, wobei die Betätigungseinrichtung (3) eine Linearantriebskette (4) antreibt, die die Bewegung des teleskopischen Rohrelements (20) steuert.

6. Auslegeranordnung zur Luftbetankung nach Anspruch 5, wobei die Betätigungseinrichtung (3) ein durch einen Motor angetriebener elektrischer/elektromechanischer Aktuator ist.

7. Auslegeranordnung zur Luftbetankung nach Anspruch 5, wobei die Betätigungseinrichtung (3) ein hydraulischer Aktuator ist.

8. Auslegeranordnung zur Luftbetankung nach Anspruch 6, wobei die zweite Erfassungseinrichtung (40) einen Drehmelder (108) zum Messen der Drehbewegung des die Betätigungseinrichtung (3) antreibenden Motors aufweist.

9. Auslegeranordnung zur Luftbetankung nach einem der vorangehenden Ansprüche, wobei die Blockiereinrichtung (60) eine elektromagnetische Reibungsbremse aufweist.

10. Auslegeranordnung zur Luftbetankung nach einem der vorangehenden Ansprüche, ferner mit einer zwischen zwei Antriebselementen (106, 104) angetriebenen Übertragungskette (4) zum Steuern der Bewegung des teleskopischen Rohrelements (20).

11. Flugzeug mit einer Auslegeranordnung zur Luftbetankung nach einem der vorangehenden Ansprüche.

## Revendications

1. Ensemble de perche de ravitaillement en vol pour aéronef comprenant une perche porteuse (10), une perche télescopique (20) et un système d'actionnement destiné à commander le mouvement de la perche télescopique (20) par rapport à la perche porteuse (10) dans les opérations de ravitaillement en vol, dans lequel le système d'actionnement comprend un dispositif d'actionnement (3) et au moins deux dispositifs de détection, un premier dispositif de détection (30) et un second dispositif de détection (40), qui mesurent des grandeurs physiques d'au moins deux éléments mécaniques différents du système d'actionnement, le premier dispositif de détection (30) mesurant le mouvement du dispositif d'actionnement (3) et le second dispositif de détection (40) mesurant le mouvement de la perche télescopique (20), de telle sorte qu'il existe une relation cinématique entre le mouvement du système d'actionnement et le mouvement de la perche télescopique (20), le système d'actionnement comprenant en outre un dispositif de commande (50) qui contrôle la cohérence desdites grandeurs physiques mesurées avec la relation cinématique,
**caractérisé en ce que**
l'ensemble de perche comprend en outre un dispositif de blocage (60) qui est destiné à éviter ou limiter le mouvement non contrôlé de la perche télescopique (20) et qui est déclenché par le dispositif de commande (50) en cas de divergence entre la relation cinématique et les mesures.

2. Ensemble de perche de ravitaillement en vol pour aéronef selon la revendication 1, dans lequel les grandeurs physiques mesurées sont la force, l'accélération, la vitesse ou la position.

3. Ensemble de perche de ravitaillement en vol pour aéronef selon l'une quelconque des revendications 1 et 2, dans lequel le premier dispositif de détection (30) mesure le déplacement linéaire de la perche télescopique (20).

4. Ensemble de perche de ravitaillement en vol pour aéronef selon la revendication 3, dans lequel le premier dispositif de détection (30) consiste en un transducteur de déplacement linéaire (LVDT).

5. Ensemble de perche de ravitaillement en vol pour aéronef selon l'une quelconque des revendications 1 à 4, dans lequel le dispositif d'actionnement (3) pilote une chaîne de transmission linéaire (4) qui commande le mouvement de la perche télescopique (20).

6. Ensemble de perche de ravitaillement en vol pour aéronef selon la revendication 5, dans lequel le dispositif d'actionnement (3) est un actionneur électrique/électro-mécanique commandé par un moteur.

7. Ensemble de perche de ravitaillement en vol pour aéronef selon la revendication 5, dans lequel le dispositif d'actionnement (3) est un actionneur hydraulique.

8. Ensemble de perche de ravitaillement en vol pour aéronef selon la revendication 6, dans lequel le second dispositif de détection (40) consiste en un résolveur rotatif (108) effectuant la mesure du mouvement de rotation du moteur qui entraîne le dispositif d'actionnement (3).

9. Ensemble de perche de ravitaillement en vol pour aéronef selon l'une quelconque des revendications précédentes, dans lequel le dispositif de blocage (60) consiste en un frein électromagnétique à friction.

10. Ensemble de perche de ravitaillement en vol pour aéronef selon l'une quelconque des revendications précédentes, comprenant en outre une chaîne de transmission (4) entraînée, placée entre deux éléments d'entraînement (106, 104) et commandant le mouvement de la perche télescopique (20).

11. Aéronef comprenant un ensemble de perche de ravitaillement selon l'une quelconque des revendications précédentes.
